# EUROPEAN PATENT APPLICATION

(11) **EP 4 711 506 A1**
(43) Date of publication of application: **18.03.2026**
(21) Application number: 24879405.9
(22) Date of filing: 01.08.2024
(51) Int. Cl.: C25B 13/02, C25B 9/73

(54) **ELECTROCHEMICAL CELL AND ELECTROCHEMICAL DEVICE**

(30) Priority: 16.10.2023 JP 2023177948
(71) Applicant: De Nora Permelec Ltd, Fujisawa-shi, Kanagawa 252-0816 (JP)
(72) Inventor: DOMON, Hiroki, Fujisawa-shi, Kanagawa 252-0816 (JP); SUNAMI, Jun, Fujisawa-shi, Kanagawa 252-0816 (JP); OTSU, Hideo, Fujisawa-shi, Kanagawa 252-0816 (JP); YOSHIMURA, Koji, Fujisawa-shi, Kanagawa 252-0816 (JP)
(74) Representative: Reitstötter Kinzebach
(86) International application number: PCT/JP2024/027491
(87) International publication number: WO 2025/083975

(57) **Abstract**

Provided are an electrochemical cell and an electrochemical device that are easily manufactured and capable of retrofitting. The electrochemical cell includes: a first plate and a second plate between which an anode chamber and a cathode chamber are respectively formed on respective opposing inner surface sides thereof; and a sealing portion provided between the first plate and the second plate, in which the sealing portion includes plural frame bodies disposed at intervals from an inner side to an outer side, and plural sealing members disposed between the plural frame bodies and disposed in a compressed state between the first plate and the second plate. The electrochemical device includes the electrochemical cell.

## Description

### TECHNICAL FIELD

The present disclosure relates to an electrochemical cell and an electrochemical device that have sealing structures.

### BACKGROUND ART

Patent Literature 1 discloses a sealing structure that separates an inside and an outside of an electrolysis cell from each other.

### CITATION LIST

### PATENT LITERATURE

Patent Literature 1: JP2003-166092A
Patent Literature 2: JPH10-286572A

### SUMMARY OF INVENTION

### TECHNICAL PROBLEM

However, in sealing structures of Patent Literature 1 and Patent Literature 2, since it is necessary to provide a groove for disposing a sealing member on an electrode plate, distortion is likely to occur, and precise processing is difficult. In addition, in the sealing structures of Patent Literature 1 and Patent Literature 2, since it is difficult to reprocess the groove of the electrode plate, it is difficult to perform retrofitting for improving sealability, and there is a problem of high processing cost even if possible.

The present disclosure has been made to solve the above-described problems, and an object of the present disclosure is to provide an electrochemical cell and an electrochemical device that are easily manufactured and have a sealing structure capable of retrofitting.

### SOLUTION TO PROBLEM

An electrochemical cell of the present disclosure includes: a first plate and a second plate between which an anode chamber and a cathode chamber are respectively formed on respective opposing inner surface sides thereof; and a sealing portion provided between the first plate and the second plate, in which the sealing portion includes plural frame bodies disposed at intervals from an inner side to an outer side, and plural sealing members disposed between the plural frame bodies and disposed in a compressed state between the first plate and the second plate.

An electrochemical device of the present disclosure includes the electrochemical cell.

In addition, according to the electrochemical cell and the electrochemical device of the present disclosure, the sealability of the electrochemical cell 1 can be maintained even under high-pressure operation.

Furthermore, according to the electrochemical cell and the electrochemical device of the present disclosure, since a differential pressure operation under high-pressure operation is possible, efficient operation according to the purpose of the electrochemical device is possible.

In the electrochemical cell and the electrochemical device of the present disclosure, the plural frame bodies are formed separately from a first plate 3a and a second plate 3b. The plural frame bodies are formed at intervals from each other. Therefore, it is possible to perform retrofitting including replacement and manufacturing of a part or all of the plural frame bodies.

In an aspect of the present disclosure, one or both of a surface opposing the first plate and a surface opposing the second plate of each of the plural frame bodies are formed of an insulator.

According to the aspect of the present disclosure, it is possible to prevent the first plate and the second plate from being electrically short-circuited via the frame body.

In an aspect of the present disclosure, one or both of the first plate and the second plate include a locking portion that restricts a relative position of the sealing portion with respect to the first plate and the second plate.

According to the aspect of the present disclosure, it is possible to prevent movement of the frame body due to pressurization or the like.

In an aspect of the present disclosure, each of the plural frame bodies includes plural frame members formed by separably dividing a part of a wall portion of the frame body in its extending direction.

According to the aspect of the present disclosure, some of the frame members can be easily replaced.

In an aspect of the present disclosure, each of the plural frame members has a connecting portion that restricts relative positions therebetween.

According to the aspect of the present disclosure, since the sealability of the sealing portion 50 can be maintained, a stable electrochemical reaction can be performed in the electrochemical cell.

### ADVANTAGEOUS EFFECTS OF INVENTION

According to the present disclosure, it is possible to provide an electrochemical cell and an electrochemical device that are easily manufactured and have a sealing structure capable of retrofitting.

### BRIEF DESCRIPTION OF DRAWINGS

[Fig. 1] Fig. 1 is an exploded view schematically illustrating an example of an electrochemical cell and an electrochemical device according to an embodiment of the present disclosure.
[Fig. 2] Fig. 2 is a plan view illustrating an example of a sealing portion according to the embodiment of the present disclosure.
[Fig. 3] Fig. 3 is a cross-sectional view illustrating an example of a frame body according to the embodiment of the present disclosure.
[Fig. 4] Fig. 4 is a plan view illustrating another example of the frame body according to the embodiment of the present disclosure.
[Fig. 5] Fig. 5 is a cross-sectional view schematically illustrating the entire electrochemical device according to the embodiment of the present disclosure.
[Fig. 6] Fig. 6 is a cross-sectional view illustrating an example of a positional relationship between a sealing portion and a diaphragm in a region A of Fig. 5.
[Fig. 7] Fig. 7 is a cross-sectional view illustrating another example of the positional relationship between the sealing portion and the diaphragm.
[Fig. 8] Fig. 8 is a cross-sectional view illustrating another example of the positional relationship between the sealing portion and the diaphragm.
[Fig. 9] Fig. 9 is a cross-sectional view illustrating an example of a locking portion that restricts a relative position of the sealing portion.
[Fig. 10] Fig. 10 is a cross-sectional view illustrating a configuration of an electrochemical cell in a comparative example.
[Fig. 11] Fig. 11 is a schematic view illustrating an example of a system configuration for performing high-pressure operation of the electrochemical device of the present embodiment.
[Fig. 12] Fig. 12 is a schematic view illustrating another example of the system configuration for performing high-pressure operation of the electrochemical device of the present embodiment.

### DESCRIPTION OF EMBODIMENTS

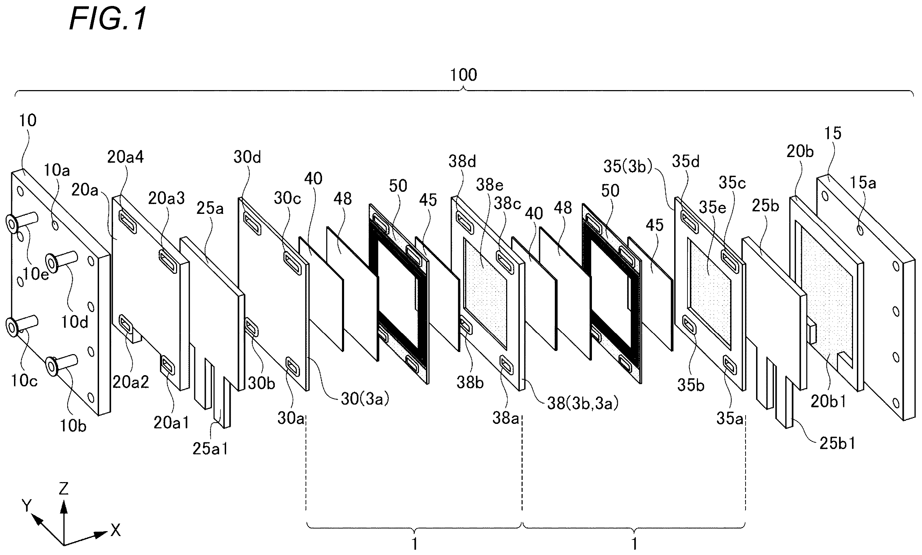

In Fig. 1, an electrochemical device 100 according to an embodiment will be described. In the following drawings, the same members or portions or members or portions having the same functions are denoted by the same reference numerals, or the reference numerals thereof are omitted.

Fig. 1 illustrates an exploded schematic view of the electrochemical device 100 in an X-axis direction (a direction in which a first plate and a second plate oppose each other). The electrochemical device 100 is formed as an electrolysis device or an electrochemical cell.

The electrolysis device is a device that chemically decomposes a compound by electric energy, and is also referred to as an electrolytic device, an electrolysis cell, or an electrolyzer. An electrolysis device is used in many industrial applications such as production of hydrogen or oxygen by water electrolysis, production of chlorine gas, caustic soda, or hydrogen by salt electrolysis, and resource recovery from waste liquid using two-compartment or three-compartment electrolysis methods. For example, the electrolysis device used for water electrolysis is not limited thereto, and is an alkaline water electrolyzer or a solid polymer water electrolyzer. The alkaline water electrolyzer is a device for producing hydrogen and oxygen by supplying electric energy to a strong alkaline aqueous solution such as a potassium hydroxide aqueous solution. The solid polymer water electrolyzer is a device for producing hydrogen and oxygen by supplying electric energy to pure water.

An electrochemical cell is a device that converts energy generated by a chemical reaction into electric energy. The electrochemical cell is formed as, for example, a fuel cell. A fuel cell is a power generation device capable of continuously extracting electricity generated by an electrochemical reaction between hydrogen and oxygen. For example, the fuel cell is, but not limited to, a polymer electrolyte fuel cell or a phosphoric acid fuel cell. The polymer electrolyte fuel cell is, for example, a fuel cell using a solid polymer such as a fluorine-based polymer having a sulfonic acid group or a porous polyimide as an electrolyte. The phosphoric acid fuel cell is a fuel cell using a phosphoric acid (H₃PO₄) aqueous solution as an electrolyte.

In the following, for the purpose of specifically describing the configuration of the electrochemical device 100, an "alkaline water electrolyzer" may be described as an example of the electrolysis device, and a "polymer electrolyte fuel cell" may be described as an example of the electrochemical cell. However, it should be noted that these descriptions are not intended to limit the configuration of the electrochemical device 100 to either the "alkaline water electrolyzer" or the "polymer electrolyte fuel cell".

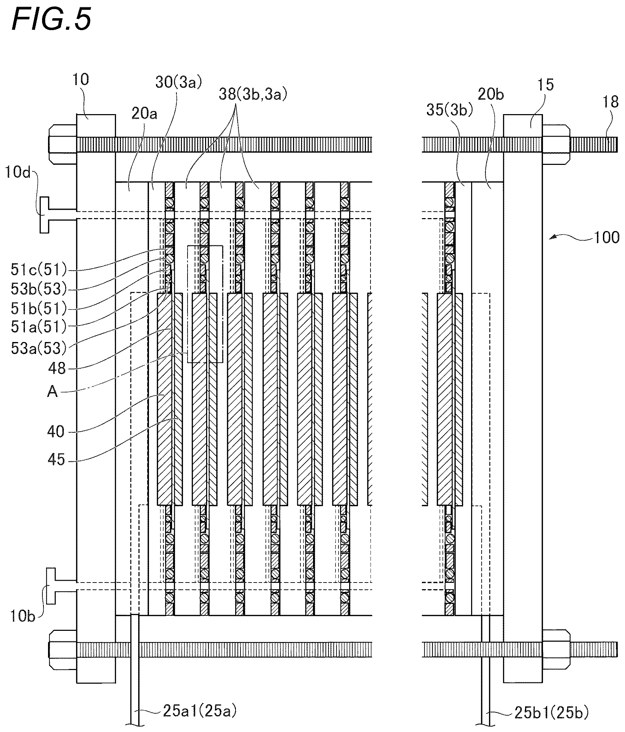

As illustrated in Fig. 1, the electrochemical device 100 includes an anode end frame 10 and a cathode end frame 15 at both ends of the electrochemical device 100. The anode end frame 10 and the cathode end frame 15 form a part of an outline of the electrochemical device 100. The anode end frame 10 and the cathode end frame 15 are formed of inexpensive steel materials such as SS400. The anode end frame 10 has plural through holes 10a. The cathode end frame 15 has plural through holes 15a corresponding to the plural through holes 10a of the anode end frame 10. The anode end frame 10 and the cathode end frame 15 are connected to each other via the through holes 10a of the anode end frame 10 and the through holes 15b of the cathode end frame 15 by, for example, fastening members 18 (see Fig. 5) including long bolts and nuts.

The anode end frame 10 includes an anolyte supply pipe 10b, a catholyte supply pipe 10c, an anolyte discharge pipe 10d, and a catholyte discharge pipe 10e. The anolyte supply pipe 10b supplies anolyte to an anode side of an electrochemical cell 1 to be described later. The catholyte supply pipe 10c supplies catholyte to a cathode side of the electrochemical cell 1 to be described later. The anolyte discharge pipe 10d discharges an anode gas or a mixed gas of the anolyte and the anode gas from the anode side of the electrochemical cell 1 to be described later. The catholyte discharge pipe 10e discharges a cathode gas or a mixed gas of the catholyte and the cathode gas from the cathode side of the electrochemical cell 1 to be described later. Some or all of the anolyte supply pipe 10b, the catholyte supply pipe 10c, the anolyte discharge pipe 10d, and the catholyte discharge pipe 10e may be provided in the cathode end frame 15. In Fig. 1, the anolyte supply pipe 10b and the anolyte discharge pipe 10d, and the catholyte supply pipe 10c and the catholyte discharge pipe 10e are aligned in a Y-axis direction (a horizontal direction), but are not limited thereto. For example, the anolyte supply pipe 10b and the catholyte discharge pipe 10e, and the catholyte supply pipe 10c and the anolyte discharge pipe 10d may be aligned in the Y-axis direction.

Here, the terms "anode side", "cathode side", "anolyte", "anode gas", "catholyte", and "cathode gas" will be described.

The "anode side" is a side of the electrochemical device 100 where a current flows from an outside to an inside of the electrochemical device 100, that is, a side where electrons flow from the inside to the outside of the electrochemical device 100. Therefore, an oxidation reaction is performed on the anode side of the electrochemical device 100.

The "cathode side" is a side of the electrochemical device 100 where a current flows from the inside to the outside of the electrochemical device 100, that is, a side where electrons flow from the outside to the inside of the electrochemical device 100. Therefore, a reduction reaction is performed on the cathode side of the electrochemical device 100.

The "anolyte" is an electrolytic solution which is one of compounds supplied to the anode side of the electrochemical device 100. For example, when the electrochemical device 100 is an alkaline water electrolyzer, the anolyte is a potassium hydroxide aqueous solution. When the electrochemical device 100 is a polymer electrolyte fuel cell, the compound supplied to the anode side of the electrochemical device 100 is hydrogen gas.

The "anode gas" is a compound in a gaseous state discharged from the anode side of the electrochemical device 100. For example, when the electrochemical device 100 is an alkaline water electrolyzer, the anode gas is oxygen gas generated by an oxidation reaction of hydroxide ions. When the electrochemical device 100 is a polymer electrolyte fuel cell, the anode gas is excess hydrogen gas that has not undergone the oxidation reaction.

The "catholyte" is an electrolytic solution which is one of compounds supplied to the cathode side of the electrochemical device 100. For example, when the electrochemical device 100 is an alkaline water electrolyzer, the catholyte is a potassium hydroxide aqueous solution. When the electrochemical device 100 is a polymer electrolyte fuel cell, the compound supplied to the cathode side of the electrochemical device 100 is air containing oxygen.

The "cathode gas" is a compound in a gaseous state discharged from the cathode side of the electrochemical device 100. For example, when the electrochemical device 100 is an alkaline water electrolyzer, the cathode gas is hydrogen gas generated by a reduction reaction of hydrogen ions. When the electrochemical device 100 is a polymer electrolyte fuel cell, the cathode gas is air containing excess oxygen gas that has not undergone a reduction reaction, and water vapor generated by reduction of the oxygen gas.

The electrochemical device 100 includes an anode spacer 20a and an anode busbar 25a.

The anode spacer 20a and the anode busbar 25a are disposed between the anode end frame 10 and the cathode end frame 15. The anode spacer 20a is disposed between the anode end frame 10 and the anode busbar 25a and abuts against the anode end frame 10. Although not illustrated in Fig. 1, the anode busbar 25a is accommodated in a recess provided in the anode spacer 20a (see Fig. 5). By accommodating the anode busbar 25a in the recess of the anode spacer 20a, the electrochemical device 100 can be miniaturized.

The anode busbar 25a is an anode-side terminal connected to an external electric circuit, and is formed of copper, although not limited thereto. An end portion 25a1 of the anode busbar 25a is exposed to the outside from the electrochemical device 100 and forms an interface for connection to an external electric circuit.

The anode spacer 20a provides electrical insulation between the anode end frame 10 and the anode busbar 25a. The anode spacer 20a is formed of an insulator and a metal body, and is formed of, for example, a rubber lining that covers a surface of a steel material such as SS400 with rubber. By providing the anode spacer 20a between the anode end frame 10 and the anode busbar 25a, it is possible to prevent an electric shock to a user due to a current in the electrochemical device 100 and to improve safety.

The anode spacer 20a has a communication hole 20a1 communicating with an internal flow path of the anolyte supply pipe 10b. The anode spacer 20a has a communication hole 20a2 communicating with an internal flow path of the catholyte supply pipe 10c. The anode spacer 20a has a communication hole 20a3 communicating with an internal flow path of the anolyte discharge pipe 10d. The anode spacer 20a has a communication hole 20a4 communicating with an internal flow path of the catholyte discharge pipe 10e. The anode spacer 20a includes an O-ring that surrounds each of the communication holes 20a1, 20a2, 20a3 and 20a4, and is disposed to abut against the anode end frame 10. The O-ring is formed of an elastic material such as ethylene propylene rubber (EPDM). By disposing the O-ring, adhesion between the anode spacer 20a and the anode end frame 10 can be improved. By improving the adhesion between the anode spacer 20a and the anode end frame 10, the anolyte, the anode gas, the catholyte, and the cathode gas can be prevented from leaking between the anode spacer 20a and the anode end frame 10.

The electrochemical device 100 includes a cathode spacer 20b and a cathode busbar 25b.

The cathode spacer 20b and the cathode busbar 25b are disposed between the anode end frame 10 and the cathode end frame 15. The cathode spacer 20b is disposed between the cathode end frame 15 and the cathode busbar 25b and abuts against the cathode end frame 15. The cathode busbar 25b is accommodated in a recess 20b1 provided in the cathode spacer 20b. By accommodating the cathode busbar 25b in the recess 20b1 of the cathode spacer 20b, the electrochemical device 100 can be miniaturized.

The cathode busbar 25b is a cathode-side terminal connected to an external electric circuit, and is formed of copper, although not limited thereto. An end portion 25b1 of the cathode busbar 25b is exposed to the outside from the electrochemical device 100 and forms an interface for connection to an external electric circuit.

The cathode spacer 20b provides electrical insulation between the cathode end frame 15 and the cathode busbar 25b. The cathode spacer 20b is formed of an insulator and a metal body, and is formed of, for example, a rubber lining that covers a surface of a steel material such as SS400 with rubber. By providing the cathode spacer 20b between the cathode end frame 15 and the cathode busbar 25b, it is possible to prevent an electric shock to a user due to a current in the electrochemical device 100 and to improve safety.

The electrochemical device 100 includes an anode end plate 30 and a cathode end plate 35.

The anode end plate 30 abuts against the anode spacer 20a and the anode busbar 25a, and is electrically connected to the anode busbar 25a. The anode end plate 30 is not particularly limited as long as it is a material with high corrosion resistance, and is formed of, for example, nickel, a nickel alloy, a titanium alloy, or the like.

The anode end plate 30 has a communication hole 30a communicating with the internal flow path of the anolyte supply pipe 10b. The anode end plate 30 has a communication hole 30b communicating with the internal flow path of the catholyte supply pipe 10c. The anode end plate 30 has a communication hole 30c communicating with the internal flow path of the anolyte discharge pipe 10d. The anode end plate 30 has a communication hole 30d communicating with the internal flow path of the catholyte discharge pipe 10e. The anode end plate 30 includes an O-ring that surrounds each of the communication holes 30a, 30b, 30c, and 30d and is disposed to abut against the anode spacer 20a. The O-ring is formed of an elastic material such as ethylene propylene rubber (EPDM). By disposing the O-ring, adhesion between the anode end plate 30 and the anode spacer 20a can be improved. By improving the adhesion between the anode end plate 30 and the anode spacer 20a, the anolyte, the anode gas, the catholyte, and the cathode gas can be prevented from leaking between the anode end plate 30 and the anode spacer 20a.

Although not illustrated in Fig. 1, the anode end plate 30 has a rectangular recess in a central portion of a surface opposite to a surface abutting against the anode busbar 25a (see Fig. 5). In addition, the anode end plate 30 has a flow path that allows the recess and the communication hole 30a to communicate and a flow path that allows the recess and the communication hole 30c to communicate (see Fig. 5). With this configuration, the anolyte is supplied from the anolyte supply pipe 10b to the recess of the anode end plate 30, and the anode gas or the mixed gas of the anolyte and the anode gas is discharged from the recess of the anode end plate 30 to the anolyte discharge pipe 10d.

The cathode end plate 35 abuts against the cathode spacer 20b and the cathode busbar 25b, and is electrically connected to the cathode spacer 20b. The cathode end plate 35 is not particularly limited as long as it is a material with high corrosion resistance, and is formed of, for example, nickel, a nickel alloy, a titanium alloy, or the like.

The cathode end plate 35 has a communication hole 35a communicating with the internal flow path of the anolyte supply pipe 10b. The cathode end plate 35 has a communication hole 35b communicating with the internal flow path of the catholyte supply pipe 10c. The cathode end plate 35 has a communication hole 35c communicating with the internal flow path of the anolyte discharge pipe 10d. The cathode end plate 35 has a communication hole 35d communicating with the internal flow path of the catholyte discharge pipe 10e. The cathode end plate 35 includes an O-ring that surrounds each of the communication holes 35a, 35b, 35c, and 35d and is disposed to abut against a sealing portion 50 to be described later. The O-ring is formed of an elastic material such as ethylene propylene rubber (EPDM). By disposing the O-ring, adhesion between the cathode end plate 35 and the sealing portion 70 can be improved. By improving the adhesion between the cathode end plate 35 and the sealing portion 70, the anolyte, the anode gas, the catholyte, and the cathode gas can be prevented from leaking between the cathode end plate 35 and the sealing portion 70.

The cathode end plate 35 has a rectangular recess 35e in a central portion of a surface opposite to a surface abutting against the cathode busbar 25b. Although not illustrated, the cathode end plate 35 includes a flow path that allows the recess 35e and the communication hole 35b to communicate, and a flow path that allows the recess 35e and the communication hole 35d to communicate. With this configuration, the catholyte is supplied from the catholyte supply pipe 10c to the recess 35e, and the cathode gas or the mixed gas of the catholyte and the cathode gas is discharged from the recess 35e to the catholyte discharge pipe 10e.

The electrochemical device 100 includes a bipolar plate 38.

The bipolar plate 38 is disposed between the anode end plate 30 and the cathode end plate 35. The bipolar plate 38 is a conductive plate having a cathode-side surface (a negative side of an X axis in Fig. 1) and an anode-side surface (a positive side of the X axis in Fig. 1), and the cathode-side surface and the anode-side surface are electrically connected in series. In the bipolar plate 38, a current flows from a cathode side to an anode side, and electrons flow from the anode side to the cathode side.

The bipolar plate 38 functions as a partition wall between the cathode side and the anode side of the bipolar plate 38. The bipolar plate 38 physically blocks the inflow of the catholyte or the cathode gas from the cathode side to the anode side of the bipolar plate 38, and physically blocks the inflow of the anolyte or the anode gas from the anode side to the cathode side of the bipolar plate 38.

The bipolar plate 38 is not particularly limited as long as it is a material with high corrosion resistance, and is formed of, for example, nickel, a nickel alloy, a titanium alloy, or the like.

The bipolar plate 38 has a communication hole 38a communicating with the internal flow path of the anolyte supply pipe 10b. The bipolar plate 38 has a communication hole 38b communicating with the internal flow path of the catholyte supply pipe 10c. The bipolar plate 38 has a communication hole 38c communicating with the internal flow path of the anolyte discharge pipe 10d. The bipolar plate 38 has a communication hole 38d communicating with the internal flow path of the catholyte discharge pipe 10e. The bipolar plate 38 has an O-ring that surrounds each of the communication holes 38a, 38b, 38c, and 38d and is disposed to abut against the sealing portion 50 to be described later. The O-ring is formed of an elastic material such as ethylene propylene rubber (EPDM). By disposing the O-ring, adhesion between the bipolar plate 38 and the sealing portion 50 can be improved. By improving the adhesion between the bipolar plate 38 and the sealing portion 50, the anolyte, the anode gas, the catholyte, and the cathode gas can be prevented from leaking between the bipolar plate 38 and the sealing portion 50.

The bipolar plate 38 has a rectangular recess 38e in a central portion of the cathode-side surface. Although not illustrated, the bipolar plate 38 has a flow path that allows the recess 38e and the communication hole 38b to communicate, and a flow path that allows the recess 38e and the communication hole 38d to communicate. With this configuration, the catholyte is supplied from the catholyte supply pipe 10c to the recess 38e, and the cathode gas or the mixed gas of the catholyte and the cathode gas is discharged from the recess 38e to the catholyte discharge pipe 10e.

Although not illustrated in Fig. 1, the bipolar plate 38 has a rectangular recess in a central portion of the anode-side surface (see Fig. 5). In addition, the bipolar plate 38 has a flow path that allows the recess and the communication hole 30a to communicate and a flow path that allows the recess and the communication hole 30c to communicate (see Fig. 5). With this configuration, the anolyte is supplied from the anolyte supply pipe 10b to the recess on the anode side of the bipolar plate 38, and the anode gas or the mixed gas of the anolyte and the anode gas is discharged from the recess on the anode side of the bipolar plate 38 to the anolyte discharge pipe 10d.

In Fig. 1, the electrochemical device 100 having one bipolar plate 38 is described, but the present invention is not limited thereto. The electrochemical device 100 may include plural bipolar plates 38 or may not include the bipolar plate 38.

Next, a configuration of the electrochemical cell 1 in the electrochemical device 100 will be described.

In the electrochemical device 100, a configuration between the anode end plate 30 and the cathode side of the bipolar plate 38 is the same as a configuration between the anode side of the bipolar plate 38 and the cathode end plate 35. That is, in the electrochemical device 100, the same basic unit is repeatedly formed. In other words, in the electrochemical device 100, identical basic units are stacked. The basic unit is referred to as the electrochemical cell 1.

In the following description, the anode end plate 30 or the bipolar plate 38 on an anode side of the electrochemical cell 1 is referred to as a first plate 3a. Further, the cathode end plate 35 or the bipolar plate 38 on a cathode side of the electrochemical cell 1 is referred to as a second plate 3b.

That is, when the electrochemical cell 1 is formed between the anode end plate 30 and the cathode side of the bipolar plate 38, the anode end plate 30 is referred to as the first plate 3a, and the bipolar plate 38 is referred to as the second plate 3b. When the electrochemical cell 1 is formed between the anode side of the bipolar plate 38 and the cathode end plate 35, the bipolar plate 38 is referred to as the first plate 3a, and the cathode end plate 35 is referred to as the second plate 3b.

When the electrochemical device 100 has plural bipolar plates 38 as illustrated in Fig. 5 (that is, three or more electrochemical cells 1 are stacked), the electrochemical cell 1 is further formed between the anode side of the bipolar plate 38 and the cathode side of the bipolar plate 38. In this case, the bipolar plate 38 on the anode side is referred to as the first plate 3a, and the bipolar plate 38 on the cathode side is referred to as the second plate 3b.

As described above, it should be noted that the bipolar plate 38 is referred to as the first plate 3a when located on the anode side of the electrochemical cell 1, and is referred to as the second plate 3b when located on the cathode side of the electrochemical cell 1. That is, the bipolar plate 38 may be interpreted as either the first plate 3a or the second plate 3b depending on a relationship with an opposing plate thereof.

When the electrochemical device 100 does not include the bipolar plate 38, the electrochemical cell 1 is formed only between the anode end plate 30 and the cathode end plate 35. In this case, the anode end plate 30 is referred to as the first plate 3a, and the cathode end plate 35 is referred to as the second plate 3b.

The electrochemical cell 1 includes an anode 40 and a cathode 45.

The anode 40 is an electrode that is disposed in the recess of the first plate 3a and abuts against the first plate 3a. Accordingly, the anode 40 is electrically connected to the anode side of the bipolar plate 38 or the anode end plate 30. A detailed configuration of the anode 40 will be described later.

The cathode 45 is an electrode that is disposed in the recess 35e or 38e of the second plate 3b and abuts against the bipolar plate 38. Accordingly, the cathode 45 is electrically connected to the cathode side of the bipolar plate 38 or the cathode end plate 35. A detailed configuration of the cathode 45 will be described later.

The electrochemical cell 1 includes a diaphragm 48 and the sealing portion 50.

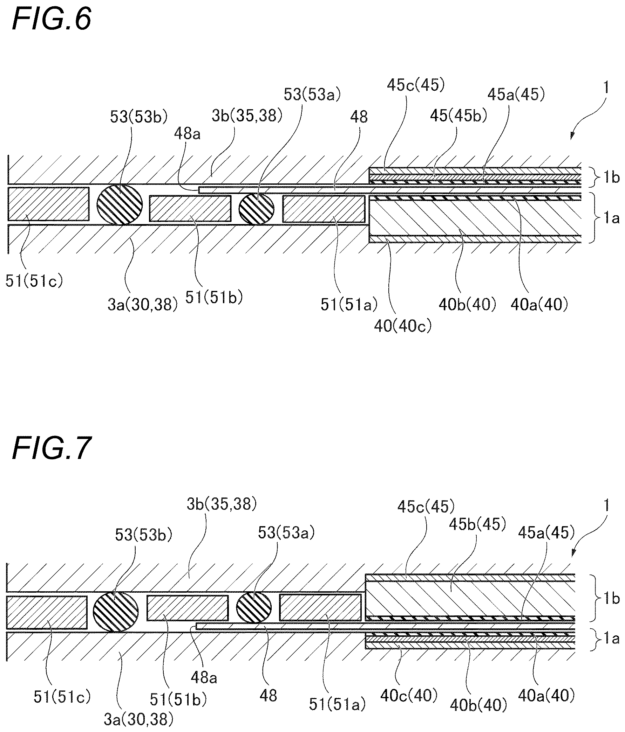

The diaphragm 48 is disposed between the anode 40 and the cathode 45. As will be described later in Figs. 6 to 8, regarding the diaphragm 48, in the electrochemical cell 1, the diaphragm 48 separates an anode chamber 1a and a cathode chamber 1b from each other.

The diaphragm 48 is preferably an ion exchange membrane or a porous membrane. The ion exchange membrane is preferably either a cation exchange membrane or an anion exchange membrane. By using either the cation exchange membrane or the anion exchange membrane as the ion exchange membrane, electrical conductivity can be improved, and reaction efficiency of an electrochemical reaction can be improved.

The sealing portion 50 is disposed between the first plate 3a and the second plate 3b. As will be described later in Figs. 6 to 8, the sealing portion 50 seals the anode chamber 1a and the cathode chamber 1b between the first plate 3a and the second plate 3b. Although the sealing portion 50 is disposed between the diaphragm 48 and the second plate 3b in Fig. 1, the sealing portion 50 may be disposed between the first plate 3a and the diaphragm 48 as illustrated in Fig. 5.

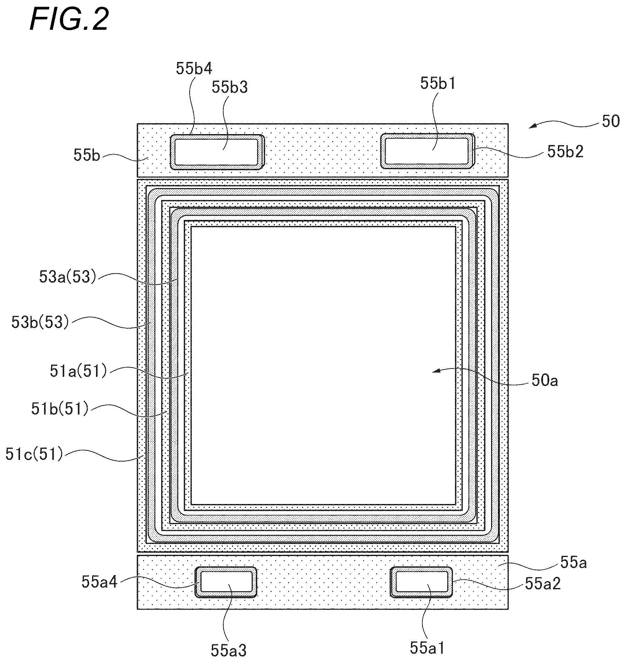

Next, a specific configuration of the sealing portion 50 will be described with reference to Fig. 2.

The sealing portion 50 includes plural frame bodies 51 and plural sealing members 53.

As illustrated in Fig. 2, the plural frame bodies 51 are plate-shaped members formed in a rectangular and flat shape, and include, for example, a first frame body 51a, a second frame body 51b, and a third frame body 51c. The second frame body 51b is on an outer peripheral side of the first frame body 51a, and is disposed at an interval from the first frame body 51a. The third frame body 51c is on an outer peripheral side of the second frame body 51b, and is disposed at an interval from the second frame body 51b.

The plural frame bodies 51 serve as a reference for determining arrangement positions of the plural sealing members 53. Further, when the plural sealing members 53 are compressed between the first plate 3a and the second plate 3b, the plural frame bodies 51 restrict a relative movement of the plural sealing members 53 with respect to the first plate 3a and the second plate 3b.

In the following description, the first frame body 51a, the second frame body 51b, and the third frame body 51c are collectively referred to as the frame body 51 when it is not particularly necessary to distinguish these frame bodies.

The plural frame bodies 51 are formed as separate frame bodies 51 from one another. The plural frame bodies 51 are formed separately from the first plate 3a and the second plate 3b. By forming one frame body 51 as a separate body from the other frame bodies 51, the first plate 3a, and the second plate 3b, retrofitting including replacement of some or all of the plural frame bodies 51 is facilitated.

The plural frame bodies 51 may be two frame bodies 51 or four or more frame bodies 51.

Further, a rectangular through hole 50a is formed inside the first frame body 51a on an innermost side of the sealing portion 50. As will be described later in Fig. 6, when the diaphragm 48 is disposed between the second plate 3b and the sealing portion 50, the rectangular through hole 50a communicates with the recess of the first plate 3a and forms the anode chamber 1a together with the recess of the first plate 3a. As will be described later in Fig. 7, when the diaphragm 48 is disposed between the first plate 3a and the sealing portion 50, the rectangular through hole 50a communicates with the recess 35e or 38e of the second plate 3b, and forms the cathode chamber 1b together with the recess 35e or 38e of the second plate 3b.

The plural sealing members 53 are disposed between the adjacent frame bodies 51 in the plural frame bodies 51. In the example of Fig. 2, the plural sealing members 53 include a first sealing member 53a disposed between the first frame body 51a and the second frame body 51b, and a second sealing member 53b disposed between the second frame body 51b and the third frame body 51c. The plural sealing members 53 seal a space between the first plate 3a and the second plate 3b, and restrict a relative position of the frame body 51 with respect to the first plate 3a and the second plate 3b.

In a direction from the first plate 3a toward the second plate 3b, a width of the first sealing member 53a is formed to be larger than widths of the first frame body 51a and the second frame body 51b. The first sealing member 53a may be in contact with or may not be in contact with the first frame body 51a or the second frame body 51b. Plural first sealing members 53a may be provided between the first frame body 51a and the second frame body 51b. In addition, when the plural first sealing members 53a are provided between the first frame body 51a and the second frame body 51b, the plural first sealing members 53a may be in contact with or may not be in contact with each other.

In the direction from the first plate 3a toward the second plate 3b, a width of the second sealing member 53b is formed to be larger than widths of the second frame body 51b and the third frame body 51c. The second sealing member 53b may be in contact with or may not be in contact with the second frame body 51b or the third frame body 51c. Plural second sealing members 53b may be provided between the second frame body 51b and the third frame body 51c. When the plural second sealing members 53b are provided between the second frame body 51b and the third frame body 51c, the plural second sealing members 53b may be in contact with or may not be in contact with each other.

The first sealing member 53a and the second sealing member 53b are not limited, but are formed as, for example, rectangular O-rings in a plan view. The first sealing member 53a and the second sealing member 53b are formed of an elastic material such as ethylene propylene rubber (EPDM), fluorine rubber, or silicon rubber, although not limited thereto. The materials of the plural sealing members 53 forming the sealing portion 50 may be the same as or different from each other.

In the following description, the first sealing member 53a and the second sealing member 53b are collectively referred to as the sealing member 53 when it is not particularly necessary to distinguish these sealing members.

The sealing portion 50 includes a first flow path plate 55a and a second flow path plate 55b. The first flow path plate 55a and the second flow path plate 55b form a pair of ends of the sealing portion 50. The first flow path plate 55a and the second flow path plate 55b restrict the relative position of the frame body 51 with respect to the first plate 3a and the second plate 3b between the first flow path plate 55a and the second flow path plate 55b.

The first flow path plate 55a has a communication hole 55a1 communicating with the internal flow path of the anolyte supply pipe 10b. The first flow path plate 55a has a communication hole 55a3 communicating with the internal flow path of the catholyte supply pipe 10c. The first flow path plate 55a includes an O-ring 55a2 that surrounds the communication hole 55a1 and is disposed to abut against the first plate 3a and the second plate 3b. The first flow path plate 55a includes an O-ring 55a4 that surrounds a communication hole 55a3 and is disposed to abut against the first plate 3a and the second plate 3b. The O-rings 55a2 and 55a4 are formed of an elastic material such as ethylene propylene rubber (EPDM). By disposing the O-rings 55a2 and 55a4, it is possible to improve adhesion between the first plate 3a and the first flow path plate 55a and adhesion between the first flow path plate 55a and the second plate 3b. By improving the adhesion, the anolyte and the catholyte can be prevented from leaking between the first plate 3a and the first flow path plate 55a, and between the first flow path plate 55a and the second plate 3b.

The second flow path plate 55b has a communication hole 55b1 communicating with the internal flow path of the anolyte discharge pipe 10d. The second flow path plate 55b has a communication hole 55b3 communicating with the internal flow path of the catholyte discharge pipe 10e. The second flow path plate 55b includes an O-ring 55a2 that surrounds the communication hole 55b1 and is disposed to abut against the first plate 3a and the second plate 3b. The first flow path plate 55a includes an O-ring 55a4 that surrounds a communication hole 55a3 and is disposed to abut against the first plate 3a and the second plate 3b. The O-rings 55b2 and 55b4 are formed of an elastic material such as ethylene propylene rubber (EPDM). By disposing the O-rings 55b2 and 55b4, it is possible to improve adhesion between the first plate 3a and the second flow path plate 55b and adhesion between the second flow path plate 55b and the second plate 3b. By improving the adhesion, the anolyte, the catholyte, the anode gas, or the cathode gas can be prevented from leaking between the first plate 3a and the second flow path plate 55b and between the second flow path plate 55b and the second plate 3b.

In Fig. 2, the first flow path plate 55a and the second flow path plate 55b are formed separately from the frame body 51, but are not limited thereto. For example, one or both of the first flow path plate 55a and the second flow path plate 55b may be integrally formed with the outermost frame body 51 (the third frame body 51c in Fig. 2) among the plural frame bodies 51.

The materials of the first flow path plate 55a and the second flow path plate 55b are not particularly limited as long as the materials are electrically insulated from a surface opposing the first plate 3a or a surface opposing the second plate 3b. More specifically, the materials of the first flow path plate 55a and the second flow path plate 55b are not particularly limited as long as an insulator such as a plastic synthetic resin is formed on one of the surface opposing the first plate 3a and the surface opposing the second plate 3b.

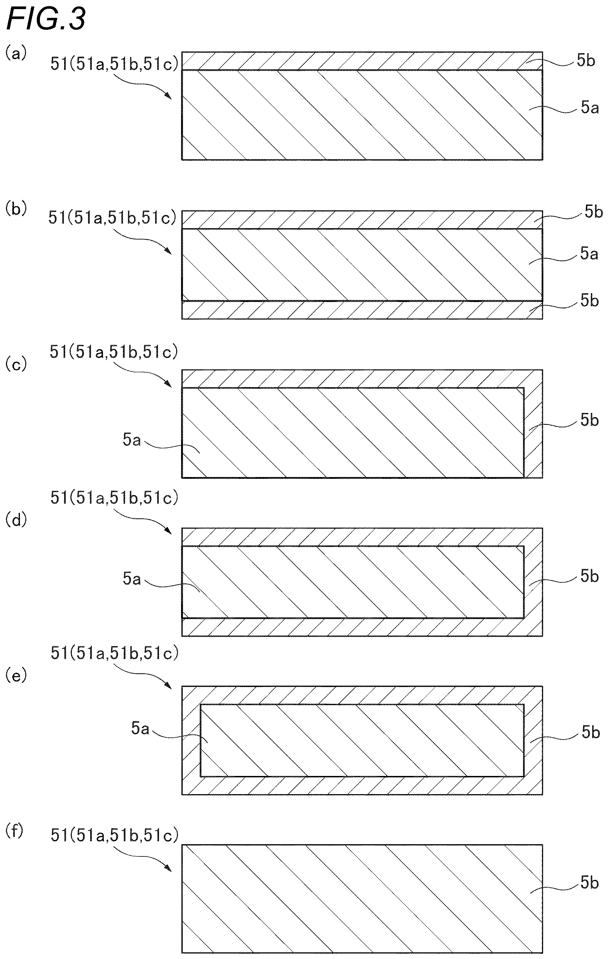

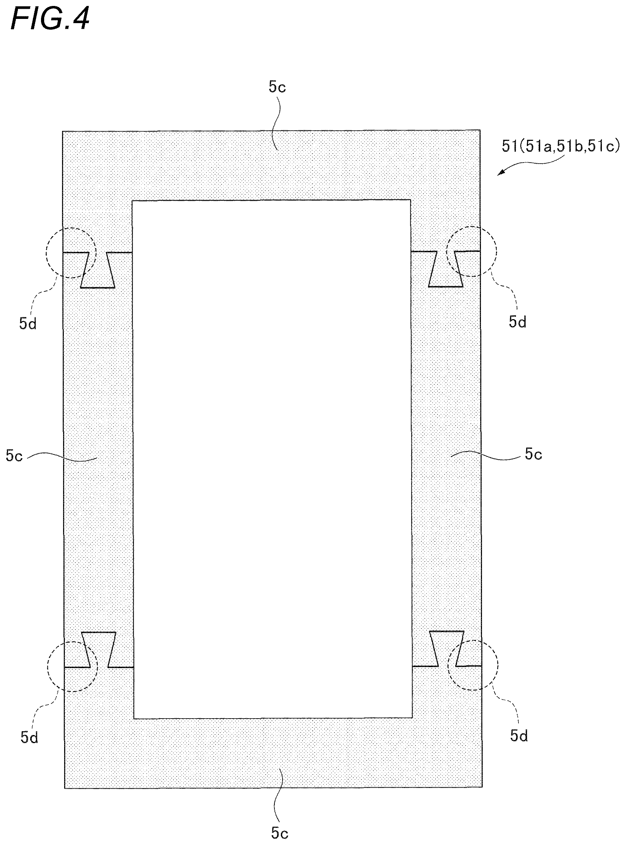

Next, a more specific configuration of the frame body 51 will be described with reference to Figs. 3 and 4.

Fig. 3 illustrates a cross-sectional view of the frame body 51. In Fig. 3, the right side of the sheet indicates an inner peripheral direction of the frame body 51 (that is, a direction of the anode chamber 1a and the cathode chamber 1b in Figs. 6 to 8), and the left side of the sheet indicates an outer peripheral direction of the frame body 51. In Fig. 3, the upper side of the sheet is either a direction of the first plate 3a or a direction of the second plate 3b.

In (a) of Fig. 3 to (e) of Fig. 3, the frame body 51 is formed of a metal body 5a and an insulator 5b. In (f) of Fig. 3, the entire frame body 51 is formed of the insulator 5b.

In the frame body 51 in (a) of Fig. 3 and (c) of Fig. 3, the insulator 5b is formed on one of the surface opposing the first plate 3a and the surface opposing the second plate 3b. In the frame body 51 in (b) of Fig. 3 and (d) of Fig. 3, the insulator 5b is formed on both the surface opposing the first plate 3a and the surface opposing the second plate 3b. According to the configurations of (a) of Fig. 3 to (d) of Fig. 3, it is possible to prevent an electrical short circuit due to contact of the metal body 5a of the frame body 51 with the first plate 3a and the second plate 3b.

As illustrated in (c) of Fig. 3 and (d) of Fig. 3, an inner peripheral end of the frame body 51 may be covered with the insulator 5b. By covering the inner peripheral direction of the frame body 51 with the insulator 5b, corrosion or the like of the metal body 5a due to contact with the anolyte, anode gas, catholyte, or cathode gas can be prevented.

As illustrated in (e) of Fig. 3, the entire surface of the metal body 5a may be covered with the insulator 5b, or as illustrated in (f) of Fig. 3, the frame body 51 may be formed of only the insulator 5b. In (e) of Fig. 3 and (f) of Fig. 3, the insulator 5b is formed on both the surface opposing the first plate 3a and the surface opposing the second plate 3b. Therefore, it is possible to prevent an electrical short circuit due to the contact of the metal body 5a of the frame body 51 with the first plate 3a and the second plate 3b.

In addition, in (e) of Fig. 3 and (f) of Fig. 3, since the inner peripheral end of the frame body 51 is covered with the insulator 5b, the corrosion or the like of the metal body 5a due to contact with the anolyte, anode gas, catholyte, or cathode gas can be prevented.

The materials of the plural frame bodies 51 forming the sealing portion 50 may be the same as or different from each other.

The metal body 5a of the frame body 51 is formed of, for example, but not limited to, stainless steel such as SUS304. When a part or all of the surface of the metal body 5a is covered with the insulator 5b as illustrated in (a) of Fig. 3 to (e) of Fig. 3, the insulator 5b may be formed of a synthetic resin such as plastic, or the surface of the metal body 5a may be covered with a tape or film made of polytetrafluoroethylene (PTFE) resin or polyimide. When the metal body 5a is partially or entirely covered with the insulator 5b as illustrated in (a) of Fig. 3 to (e) of Fig. 3, rubber lining may be performed to cover the surface of the metal body 5a by directly vulcanizing and adhering rubber to the surface. When the entire frame body 51 is formed of an insulator as illustrated in (f) of Fig. 3, the insulator 5b may be formed of a synthetic resin such as plastic.

The cross-sectional shape of the frame body 51 is a rectangular shape in Fig. 3, but is not limited thereto as long as a surface opposing the first plate 3a and the second plate 3b is a flat surface parallel to the first plate 3a and the second plate 3b. For example, in the cross-sectional shape of the frame body 51, a width of the surface opposing the first plate 3a may be the same as or different from a width of the surface opposing the second plate 3b. In the cross-sectional shape of the frame body 51, a shape of a surface extending from the surface opposing the first plate 3a to the surface opposing the second plate 3b may be a flat shape or a bent shape.

Each of the frame bodies 51 may be integrally formed as illustrated in Fig. 2, or may include plural frame members 5c as illustrated in Fig. 4. The plural frame members 5c are formed by separably dividing the flat surface of the frame body 51, that is, a part of a wall portion of the frame body 51 in its extending direction. By forming the frame body 51 from the plural frame members 5c, it is possible to easily replace some of the frame members 5c.

In Fig. 4, the frame body 51 is divided into four frame members 5c, but is not limited thereto. The frame body 51 may be divided into two or three frame members 5c, or may be divided into five or more frame members 5c.

Further, as illustrated in Fig. 4, the frame members 5c may have connecting portions 5d. The connecting portions 5d are formed to restrict relative positions of the frame members 5c. For example, each of the connecting portions 5d is formed as a protrusion protruding from an edge of the frame member 5c or a locking portion capable of locking the protrusion by cutting out the edge of the frame member 5c. For example, a width of a terminal end of the protrusion is formed to be larger than a width of a starting end of the protrusion, and the protrusion is formed not to be detached from the locking portion due to the movement along the first plate 3a and the second plate 3b. Since each of the frame members 5c has the connecting portion 5d that restricts the relative position therebetween, the movement of the frame member 5c along the first plate 3a and the second plate 3b can be restricted so that the frame member 5c cannot be displaced, and the shape of the frame body 51 can be prevented from collapsing. Therefore, since each of the frame members 5c has the connecting portion 5d that restricts the relative position therebetween, the sealability of the sealing portion 50 can be maintained, and a stable electrochemical reaction can be performed in the electrochemical cell 1.

As illustrated in the example of Fig. 5, the electrochemical device 100 typically includes plural first plates 3a and plural second plates 3b. As described above with reference to Fig. 2, the diaphragm 48 and the sealing portion 50 are disposed between the first plate 3a and the second plate 3b adjacent to each other among the plural first plates 3a and the plural second plates 3b. As described above with reference to Fig. 2, the electrochemical cell 1 is formed between the first plate 3a and the second plate 3b adjacent to each other. The components of the electrochemical device 100 illustrated in Fig. 1 are fixed by fastening, for example, with the fastening member 18 including the long bolt and the nut via the through hole 10a of the anode end frame 10 and the through hole 15b of the cathode end frame 15 illustrated in Fig. 1. Accordingly, each sealing member (such as an O-ring) constituting a sealing portion that seals a space between the first plate 3a and the second plate 3b is compressed in a direction in which both plates oppose each other. In this way, each sealing member is disposed in a compressed state between the two plates, thereby sealing a space between the two plates (details will be described later).

Next, a positional relationship between the sealing portion and the diaphragm in the electrochemical cell 1 will be described with reference to Figs. 6 to 9.

Fig. 6 illustrates a structure in a region A of Fig. 5. The structure of the region A is a part of a structure between the first plate 3a and the second plate 3b adjacent to each other, and corresponds to a part of the structure of the electrochemical cell 1.

The electrochemical cell 1 has the anode chamber 1a and the cathode chamber 1b. The diaphragm 48 separates the anode chamber 1a and the cathode chamber 1b from each other. Regarding the diaphragm 48, at an outer peripheral end 48a of the diaphragm 48, the first plate 3a is provided on the anode chamber 1a side. At the outer peripheral end 48a of the diaphragm 48, the second plate 3b is provided on the cathode chamber 1b side. The anode chamber 1a is formed between a surface of the diaphragm 48 opposing the first plate 3a and a surface of the first plate 3a having a recess. The cathode chamber 1b is formed between a surface of the diaphragm 48 opposing the second plate 3b and a surface of the second plate 3b having the recess 35e or 38c.

The sealing portion 50 is sandwiched between the first plate 3a and the second plate 3b. The sealing portion 50 seals the anode chamber 1a and the cathode chamber 1b between the first plate 3a and the second plate 3b.

In Fig. 6, the sealing portion 50 is disposed between the diaphragm 48 and the second plate 3b. The through hole 50a (see Fig. 3) of the sealing portion 50 communicates with the recess of the first plate 3a, and forms the anode chamber 1a together with the recess of the first plate 3a. The recess 35e or 38e of the second plate 3b forms the cathode chamber 1b.

As illustrated in Fig. 7, the sealing portion 50 may be disposed between the diaphragm 48 and the second plate 3b. In this case, the through hole 50a (see Fig. 3) of the sealing portion 50 communicates with the recess 35e or 38e of the second plate 3b, and forms the cathode chamber 1b together with the recess 35e or the recess 38e of the second plate 3b. The recess of the first plate 3a forms the anode chamber 1a.

The plural frame bodies 51 are disposed between the first plate 3a and the second plate 3b. The plural frame bodies 51 are disposed at intervals from the outer peripheral end 48a of the diaphragm 48 toward the outside of the outer peripheral end 48a of the diaphragm 48. That is, as described above with reference to Fig. 2, the second frame body 51b is on the outer peripheral side of the first frame body 51a and is disposed at an interval from the first frame body 51a. The third frame body 51c is on the outer peripheral side of the second frame body 51b, and is disposed at an interval from the second frame body 51b.

The plural sealing members 53 are disposed between the first plate 3a and the second plate 3b. The plural sealing members 53 are disposed between the adjacent frame bodies 51 in the plural frame bodies 51. For example, as described above with reference to Fig. 2, the first sealing member 53a is disposed between the first frame body 51a and the second frame body 51b in Figs. 6 and 7. The second sealing member 53b is disposed between the second frame body 51b and the third frame body 51c.

In Figs. 6 and 7, the cross-sectional shape of the sealing member 53 is illustrated as a circular shape or an elliptical shape, but the cross-sectional shape is not limited thereto as long as the sealability can be ensured. For example, the cross-sectional shape of the sealing member 53 may be a rectangular shape or a polygonal shape.

In Figs. 6 and 7, the outer peripheral end 48a of the diaphragm 48 is located inside the second sealing member 53b, which is the sealing member 53 located on the outermost side among the plural sealing members 53, and is located outside the first sealing member 53a, which is the sealing member 53 located on the innermost side among the plural sealing members 53.

In Fig. 6, among the plural sealing members 53, the first sealing member 53a located on the innermost side is disposed in a compressed state between the first plate 3a and the outer peripheral end 48a of the diaphragm 48. In Fig. 7, among the plural sealing members 53, the first sealing member 53a located on the innermost side is disposed in a compressed state between the second plate 3b and the outer peripheral end 48a of the diaphragm 48. That is, among the plural sealing members 53, one sealing member 53, for example, the first sealing member 53a is disposed in a compressed state between one of the first plate 3a and the second plate 3b and the outer peripheral end 48a of the diaphragm 48.

In Figs. 6 and 7, the second sealing member 53b located on the outermost side among the plural sealing members 53 is disposed outside the outer peripheral end 48a of the diaphragm 48. The second sealing member 53b is disposed in a compressed state between the first plate 3a and the second plate 3b. That is, among the plural sealing members 53, another sealing member 53, for example, the second sealing member 53b is disposed in a compressed state between the first plate 3a and the second plate 3b outside the outer peripheral end 48a of the diaphragm 48.

When the diaphragm 48 is one of an anion exchange membrane and a cation exchange membrane, which are ion exchange membranes, or a porous membrane, the anolyte, the anode gas, the catholyte, or the cathode gas may leak through the diaphragm 48. When the anolyte, the anode gas, the catholyte, or the cathode gas leaks through the diaphragm 48 and leaks to the outside of the electrochemical cell 1, contamination of a surrounding environment or exposure to a user occurs due to the leakage of the anolyte, the anode gas, the catholyte, or the cathode gas.

In particular, when the ion exchange membrane is the diaphragm 48 reinforced with a reinforcing yarn, a minute gap is formed between surface irregularities caused by the reinforcing yarn and the first sealing member 53a, and a small amount of anolyte, anode gas, catholyte, or cathode gas may leak through the gap. In addition, in the case of an ion exchange membrane having a sacrificial core material, after the core material is eluted, a small amount of liquid anolyte or catholyte passes through an area where the core material was present, and leaks to the outer peripheral end 48a of the ion exchange membrane, and crystals may be precipitated.

When the diaphragm 48 is a porous membrane, a small amount of anolyte, anode gas, catholyte, or cathode gas may leak to an outer peripheral side of the first sealing member 53a through a porous pore portion. In particular, when the leaked anolyte or catholyte is a liquid, the anolyte or catholyte may leak to the outer peripheral end 48a of the porous membrane to precipitate crystals.

However, in the above-described configuration, among the plural sealing members 53, another sealing member 53, for example, the second sealing member 53b is disposed in a compressed state between the first plate 3a and the second plate 3b outside the outer peripheral end 48a of the diaphragm 48. That is, the outer peripheral end 48a of the diaphragm 48 is located at least inside the second sealing member 53b, which is the sealing member 53 located on the outermost side among the plural sealing members 53.

Therefore, in the above-described configuration, even when a small amount of anolyte, anode gas, catholyte, or cathode gas leaks to the outer peripheral side of the first sealing member 53a through the diaphragm 48, further leakage to an outer peripheral side of another sealing member 53 can be prevented. Therefore, the contamination of the surrounding environment or the exposure to the user due to the leakage of the anolyte, the anode gas, the catholyte, or the cathode gas can be prevented, and the reliability of the electrochemical cell 1 can be ensured.

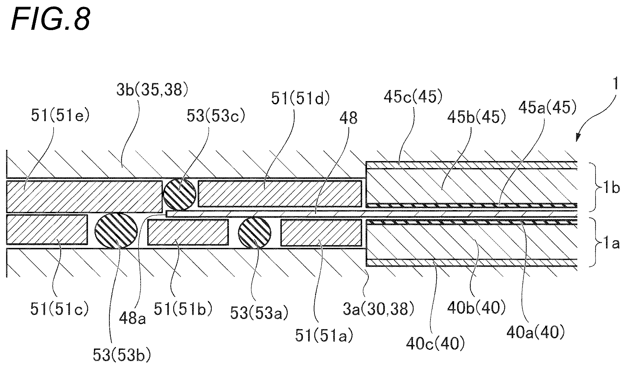

The sealing portion 50 may be configured to have a single layer as illustrated in Figs. 6 and 7 or multiple layers as illustrated in Fig. 8 between the first plate 3a and the second plate 3b.

In Fig. 8, since the diaphragm 48 is disposed between the layers of the sealing portion 50, the through hole 50a (see Fig. 3) of the sealing portion 50 is disposed on both a side opposing the first plate 3a and a side opposing the second plate 3b of the diaphragm 48. The through hole 50a on the side opposing the first plate 3a of the diaphragm 48 communicates with the recess of the first plate 3a, and forms the anode chamber 1a together with the recess of the first plate 3a. The through hole 50a on the side opposing the second plate 3b of the diaphragm 48 communicates with the recess 35e or 38e of the second plate 3b, and forms the cathode chamber 1b together with the recess 35e or the recess 38e of the second plate 3b.

In the electrochemical cell 1 of Fig. 8, a fourth frame body 51d is disposed as one of the plural frame bodies 51 between the first frame body 51a and the first sealing member 53a, and the second plate 3b. A fifth frame body 51e is disposed as one of the plural frame bodies 51 between the third frame body 51c and the second sealing member 53b, and the second plate 3b. The fifth frame body 51e is disposed on an outer peripheral side of the fourth frame body 51d. The fifth frame body 51e is disposed at an interval from the fourth frame body 51d. In Fig. 8, an outer peripheral end of the fourth frame body 51d and an inner peripheral end of the fifth frame body 51e are disposed between the second frame body 51b and the second plate 3b, but are not limited thereto. One or both of the outer peripheral end of the fourth frame body 51d and the inner peripheral end of the fifth frame body 51e may not be disposed between the second frame body 51b and the second plate 3b.

A third sealing member 53c is disposed as one of the plural sealing members 53 between the fourth frame body 51d and the fifth frame body 51e. The third sealing member 53c is disposed between the second frame body 51b and the second plate 3b. In Fig. 8, the third sealing member 53c is disposed in a compressed state between the second plate 3b and the diaphragm 48, but is not limited thereto. The third sealing member 53c may be disposed in a compressed state between the first plate 3a and the second plate 3b outside the outer peripheral end 48a of the diaphragm 48.

The other configuration of the electrochemical cell 1 in Fig. 8 is the same as the configuration of the electrochemical cell 1 in Figs. 6 and 7 described above, and thus the description thereof will be omitted.

In Fig. 8, similarly to Figs. 6 and 7, the outer peripheral end 48a of the diaphragm 48 is located inside the second sealing member 53b, which is the sealing member 53 located on the outermost side among the plural sealing members 53, and is located outside the first sealing member 53a, which is the sealing member 53 located on the innermost side among the plural sealing members 53.

In Fig. 8, among the plural sealing members 53, at least one sealing member 53, for example, the first sealing member 53a is disposed in a compressed state between one of the first plate 3a and the second plate 3b and the outer peripheral end 48a of the diaphragm 48. In addition, among the plural sealing members 53, another sealing member 53, for example, the second sealing member 53b is disposed in a compressed state between the first plate 3a and the second plate 3b outside the outer peripheral end 48a of the diaphragm 48.

Therefore, also in the configuration of Fig. 8, even when a small amount of anolyte, anode gas, catholyte, or cathode gas leaks to the outer peripheral side of the first sealing member 53a through the diaphragm 48, further leakage to the outer peripheral side of another sealing member 53 can be prevented. Therefore, the contamination of the surrounding environment or the exposure to the user due to the leakage of the anolyte, the anode gas, the catholyte, or the cathode gas can be prevented, and the reliability of the electrochemical cell 1 can be ensured.

Further, according to the configuration of the sealing portion 50 of the present embodiment, the sealability of the electrochemical cell 1 can be maintained even under high-pressure operation. This effect will be described later.

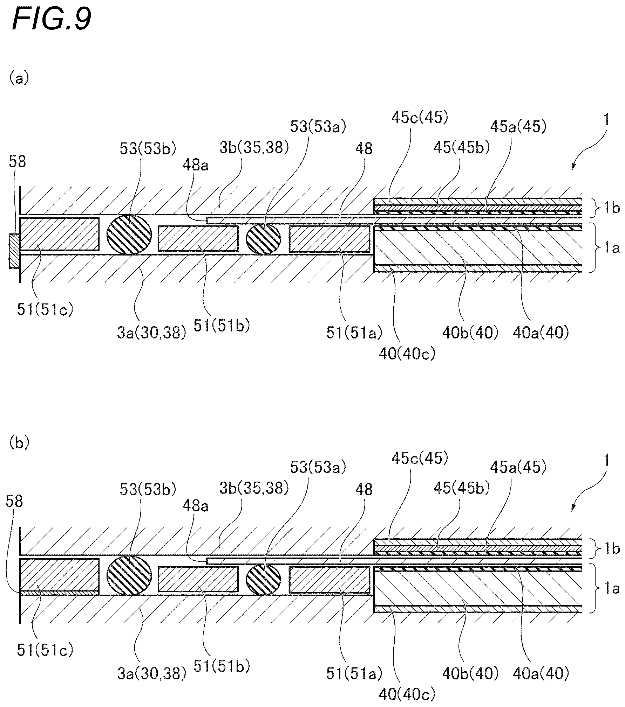

As illustrated in Fig. 9, one or both of the first plate 3a and the second plate 3b may have a locking portion 58 that restricts a relative position of the sealing portion 50 with respect to the first plate 3a and the second plate 3b. As described above, since the relative position of the frame body 51 with respect to the first plate 3a and the second plate 3b is restricted within a certain range by the sealing member 53, the first flow path plate 55a, and the second flow path plate 55b, the relative position of the sealing portion 50 is restricted within a certain range as a whole.

However, by providing the locking portions 58 on the first plate 3a and the second plate 3b, the frame body 51 and the sealing member 53 can be positioned more accurately. Further, the positional movement of the frame body 51 and the sealing member 53 can be restricted due to the fastening by the fastening member 18 of the electrochemical device 100 (see Fig. 5) so that the frame body 51 and the sealing member 53 cannot be displaced. Further, it is possible to prevent the movement of the frame body 51 due to the pressurization of the anode chamber 1a and the cathode chamber 1b during the operation of the electrochemical device 100. The locking portion 58 may be, but is not limited to, a guide or a pin having a protruding shape or a plate shape as illustrated in (a) of Fig. 9, or may be an insulating adhesive material such as an adhesive tape as illustrated in (b) of Fig. 9. Further, the locking portion 58 may be a protrusion formed by welding, or may be formed by embossing the surfaces of the first plate 3a and the second plate 3b. Further, when the insulating adhesive material as illustrated in (b) of Fig. 9 is employed as the locking portion, the first plate 3a or the second plate 3b can be insulated from the frame body 51.

Next, configurations of the anode 40 and the cathode 45 in the electrochemical cell 1 will be described with reference to Figs. 6 to 9.

As described above, the anode 40 is an electrode that is disposed in the recess of the first plate 3a and abuts against the first plate 3a. Accordingly, the anode 40 is electrically connected to the anode side of the bipolar plate 38 or the anode end plate 30. The anode 40 is formed of a material permeable to anolyte or an anode gas.

The anode 40 includes an anode catalyst layer 40a, an anode substrate 40b, and an anode current collector 40c. A part or all of the anode catalyst layer 40a, the anode substrate 40b, and the anode current collector 40c may be integrally formed or may be formed as separate bodies.

The anode catalyst layer 40a is formed, for example, on one surface of the anode substrate 40b. The anode catalyst layer 40a is formed by applying, to the anode substrate 40b, an anode catalyst selected from metals such as iridium, ruthenium, and platinum, and oxides of the metals, depending on the type of the anolyte or anode gas. The anode catalyst layer 40a may have an anode catalyst carrier supporting an anode catalyst. As the anode catalyst carrier, for example, an electron conductive material such as a porous metal or a porous metal oxide is used.

The anode substrate 40b is formed between the anode catalyst layer 40a and the anode current collector 40c. The anode substrate 40b is formed as, for example, a mesh material made of titanium, nickel, or stainless steel, a nonwoven or woven sheet material, a foam, or a fiber body, depending on the type of the anolyte or anode gas.

The anode current collector 40c is a conductor that collects electricity, and abuts against the first plate 3a in the recess of the first plate 3a. The anode current collector 40c may be formed of a mattress, cushion, or sintered fiber bodies made of metals such as titanium, or foamed metal, or may be formed of carbon paper or carbon cloth made of carbon, depending on the type of the anolyte or anode gas.

The anode catalyst layer 40a is preferably in close contact with the diaphragm 48, although not limited thereto. Since a gap between the anode catalyst layer 40a and the diaphragm 48 can be eliminated by allowing the anode catalyst layer 40a to abut against the diaphragm 48, a decrease in conductivity caused by the gap can be prevented, and the performance of the electrochemical cell 1 can be improved. When the anode catalyst layer 40a abuts against the diaphragm 48, the anode substrate 40b may be omitted, and the anode catalyst layer 40a may be supported by the anode current collector 40c. By supporting the anode catalyst layer 40a by the anode current collector 40c, the anode catalyst layer 40a can be reliably brought into close contact with the diaphragm 48, and conductivity between the anode catalyst layer 40a and the diaphragm 48 can be ensured.

In Figs. 6 to 9, the anode catalyst layer 40a is formed on one surface of the anode substrate 40b, but is not limited thereto. For example, the anode catalyst layer 40a may be formed by directly applying an anode catalyst to the diaphragm 48, followed by drying. When the anode catalyst layer 40a is formed on the diaphragm 48, it is preferable to omit the anode substrate 40b and bring the anode current collector 40c into direct contact with the anode catalyst layer 40a. By bringing the anode current collector 40c into direct contact with the anode catalyst layer 40a, conductivity between the anode catalyst layer 40a and the first plate 3a can be ensured.

As described above, the cathode 45 is an electrode that is disposed in the recess 35e or 38e of the second plate 3b and abuts against the second plate 3b. Accordingly, the cathode 45 is electrically connected to the cathode side of the bipolar plate 38 or the cathode end plate 35. The cathode 45 is formed of a material permeable to catholyte or a cathode gas.

The cathode 45 includes a cathode catalyst layer 45a, a cathode substrate 45b, and a cathode current collector 45c. A part or all of the cathode catalyst layer 45a, the cathode substrate 45b, and the cathode current collector 45c may be integrally formed or may be formed as separate bodies.

The cathode catalyst layer 45a is formed, for example, on one surface of the cathode substrate 45b. The cathode catalyst layer 45a is formed by applying, to the cathode substrate 45b, a cathode catalyst selected from metals such as ruthenium and platinum and oxides of the metals, depending on the type of the catholyte or cathode gas. The cathode catalyst layer 45a may have a cathode catalyst carrier supporting a cathode catalyst. As the cathode catalyst carrier, for example, an electron conductive material such as porous carbon, a porous metal, or a porous metal oxide is used.

The cathode substrate 45b is formed between the cathode catalyst layer 45a and the cathode current collector 45c. The cathode substrate 45b is formed as, for example, a mesh material made of titanium, nickel, or stainless steel, a nonwoven or woven sheet material, a foam, or a fiber body, depending on the type of the catholyte or cathode gas.

The cathode current collector 45c is a conductor that collects electricity, and abuts against the second plate 3b in the recess 35e or 38e of the second plate 3b. The cathode current collector 45c may be formed of a mattress, cushion, or sintered fiber bodies made of metals such as titanium, or foamed metal, or may be formed of carbon paper or carbon cloth made of carbon, depending on the type of the catholyte or cathode gas.

The cathode catalyst layer 45a is preferably in close contact with the diaphragm 48, although not limited thereto. Since a gap between the cathode catalyst layer 45a and the diaphragm 48 can be eliminated by allowing the cathode catalyst layer 45a to abut against the diaphragm 48, a decrease in conductivity caused by the gap can be prevented, and the performance of the electrochemical cell 1 can be improved. When the cathode catalyst layer 45a abuts against the diaphragm 48, the cathode substrate 45b may be omitted, and the cathode catalyst layer 45a may be supported by the cathode current collector 45c. By supporting the cathode catalyst layer 45a by the cathode current collector 45c, the cathode catalyst layer 45a can be reliably brought into close contact with the diaphragm 48, and conductivity between the cathode catalyst layer 45a and the diaphragm 48 can be ensured.

In Figs. 6 to 8, the cathode catalyst layer 45a is formed on one surface of the cathode substrate 45b, but is not limited thereto. For example, the cathode catalyst layer 45a may be formed by directly applying a cathode catalyst to the diaphragm 48, followed by drying. When the cathode catalyst layer 45a is formed on the diaphragm 48, it is preferable to omit the cathode substrate 45b and bring the cathode current collector 45c into direct contact with the cathode catalyst layer 45a. By bringing the cathode current collector 45c into direct contact with the cathode catalyst layer 45a, conductivity between the cathode catalyst layer 45a and the second plate 3b can be ensured.

In the electrochemical cell 1, one or both of the anode catalyst layer 40a and the cathode catalyst layer 45a preferably abut against the diaphragm 48, or are directly applied to the diaphragm 48 and then dried.

Next, effects obtained by employing the configuration of the sealing portion 50 of the present embodiment will be described.

### [Examples]

As the structure of the electrochemical cell 1, the structure in Fig. 6 was employed, and an electrolytic area was 110 cm². As the first plate 3a and the second plate 3b, anode end plates made of titanium were used. As the anode catalyst layer 40a and the anode substrate 40b, DSA (registered trademark) (De Nora Permelec Ltd) was used. As the anode current collector 40c, a leaf spring made of titanium was used. As the cathode catalyst layer 45a and the cathode substrate 45b, E-TEK (registered trademark) (product number P1110W, manufactured by Industrie De Nora Co., Ltd.) was used. As the cathode current collector 45c, Kreka cloth (product number B-300, Kureha Corporation) was used.

The first frame body 51a, the second frame body 51b, and the third frame body 51c were made of polytetrafluoroethylene (PTFE) or stainless steel (SUS3049a) with PTFE tape attached. The widths of the first frame body 51a, the second frame body 51b, and the third frame body 51c in the direction from the second plate 3b toward the first plate 3a were all 3.0 mm.

As the first sealing member 53a and the second sealing member 53b, an O-ring made of ethylene propylene rubber (EPDM) having a cross-sectional diameter of 4.0 mm was used.

As the diaphragm 48, an ion exchange membrane (product number Sx-1811WN, AGC Inc.) was used. The ion exchange membrane was immersed in 1% sulfuric acid at room temperature for 24 hours to convert the ion exchange membrane from the sodium form to the proton form. Thereafter, in order to prevent damage due to pressure, the ion exchange membrane was immersed in pure water at room temperature for 4 hours or more before assembling the electrochemical cell 1. The ion exchange membrane was cut such that the outer peripheral end 48a of the ion exchange membrane was located between the first sealing member 53a and the second sealing member 53b, and the second sealing member 53b was located outside the outer peripheral end 48a of the ion exchange membrane. The first sealing member 53a was brought into contact with the first plate 3a. The ion exchange membrane was sandwiched between the first sealing member 53a and the second plate 3b.

The electrochemical cell 1 was compressed by fastening the fastening member 18 (see Fig. 5). The widths of the first sealing member 53a and the second sealing member 53b after compression in the direction from the second plate 3b toward the first plate 3a were calculated based on a gap distance between the third frame body 51c and the second plate 3b after the fastening member 18 was fastened. The widths of the first sealing member 53a and the second sealing member 53b after compression were 3.3 mm.

### [Comparative Examples]

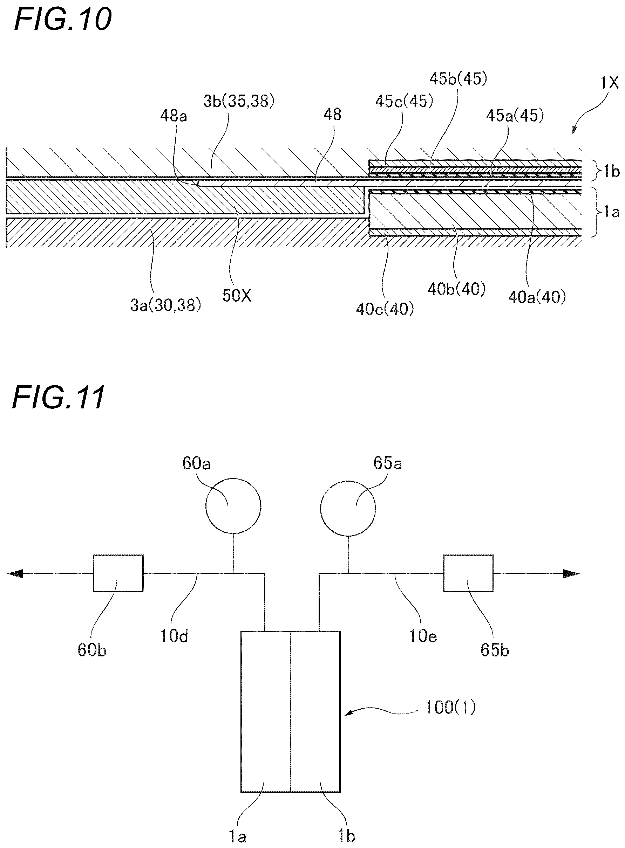

As a comparative example, an electrochemical cell 1X of Fig. 10 was used. In the electrochemical cell 1X of the comparative example, a gasket 50X made of ethylene propylene rubber (EPDM) was used instead of the frame body 51 and the sealing member 53. The gasket 50X was brought into contact with the first plate 3a. The ion exchange membrane was sandwiched between the gasket 50X and the second plate 3b. Other configurations of the electrochemical cell 1X of the comparative example were the same as those of the electrochemical cell 1 of the example.

### [Experimental Example 1]

In Experimental Example 1, the first frame body 51a, the second frame body 51b, and the third frame body 51c of the electrochemical cell 1 in the example were made of polytetrafluoroethylene (PTFE), and the pressurization test was carried out. The anolyte discharge pipe 10d and the catholyte discharge pipe 10e (see Fig. 1) were closed by plugs, and the anolyte supply pipe 10b and the catholyte supply pipe 10c (see Fig. 1) were connected to a supply pipe of a nitrogen gas source. The supply pipe of the nitrogen gas source was connected to a pressure gauge. The anode chamber 1a and the cathode chamber 1b in the electrochemical cell 1 of the example and the electrochemical cell 1X of the comparative example were pressurized to the same pressure by the nitrogen gas supplied from the supply pipe of the nitrogen gas source. After the anode chamber 1a and the cathode chamber 1b were pressurized to a constant pressure, a valve on a primary side of the pressure gauge was closed. The presence or absence of leakage of nitrogen gas was confirmed by checking a pressure change of the pressure gauge after closure. A pressurization test was performed by gradually increasing a gas pressure. The pressurization time at the same pressure was 15 minutes.

In the electrochemical cell 1 of Experimental Example 1, no leakage of nitrogen gas was confirmed even after the pressure in the anode chamber 1a and the cathode chamber 1b reached 300 kPaG. On the other hand, in the electrochemical cell 1X of the comparative example, leakage of nitrogen gas was confirmed when the pressure reached 80 kPaG.

In addition, when the electrochemical cell 1 of the example was disassembled and observed after the experiment, deformation of the third frame body 51c due to slight protrusion in the outer peripheral direction was confirmed.

### [Experimental Example 2]

In Experimental Example 2, the first frame body 51a, the second frame body 51b, and the third frame body 51c of the electrochemical cell 1 in the example were formed by attaching a PTFE tape to stainless steel (SUS304), and a pressurization test was carried out. Other experimental conditions are the same as those of Experimental Example 1.

In the electrochemical cell 1 of Experimental Example 2, no leakage of nitrogen gas was confirmed even after the pressure in the anode chamber 1a and the cathode chamber 1b reached 450 kPaG.

In addition, when the electrochemical cell 1 of the example was disassembled and observed after the experiment, deformation of the third frame body 51c due to protrusion in the outer peripheral direction was not confirmed.

### [Considerations on Experimental Example 1 and Experimental Example 2]

In the electrochemical cell 1X of the comparative example, leakage of nitrogen gas was confirmed when the pressures in the anode chamber 1a and the cathode chamber 1b reached 80 kPaG. On the other hand, in the electrochemical cell 1 of the example, even when the anode chamber 1a and the cathode chamber 1b were pressurized to a pressure of 3.5 times or more the pressure of the electrochemical cell 1X of the comparative example, leakage of the nitrogen gas was not confirmed. Therefore, in Experimental Example 1 and Experimental Example 2, it is suggested that the sealability of the electrochemical cell 1 can be sufficiently maintained even under high-pressure operation with the configuration of the sealing portion 50 of the present embodiment. As described above, in both experimental examples, since plural O-rings or frame bodies can be disposed without performing additional processing such as groove formation in the conventional art on the first plate 3a or the second plate 3b, a sealing structure having high sealability can be easily provided.

For example, in the electrochemical device 100 (the electrolysis device) for the purpose of hydrogen production, a high-pressure operation at several tens of kPa or more, preferably at several MPa may be required in consideration of supply or storage of hydrogen. However, according to the configuration of the sealing portion 50 of the present embodiment, since the sealability of the electrochemical cell 1 can be maintained even under high-pressure operation, the stability of the electrochemical cell 1 can be ensured.

In Experimental Example 1, the frame body 51 made of polytetrafluoroethylene (PTFE) was employed, and in this case, deformation of the third frame body 51c due to pressurization was observed. On the other hand, in Experimental Example 2, the frame body 51 made of stainless steel (SUS304) is employed, and in this case, deformation of the third frame body 51c due to pressurization is not observed. Therefore, in Experimental Example 1 and Experimental Example 2, it is suggested that the frame body 51 (see (a) of Fig. 3 to (e) of Fig. 3) partially including the metal body is more preferable under the high-pressure operation than the frame body 51 (see (f) of Fig. 3) formed only of the insulator.

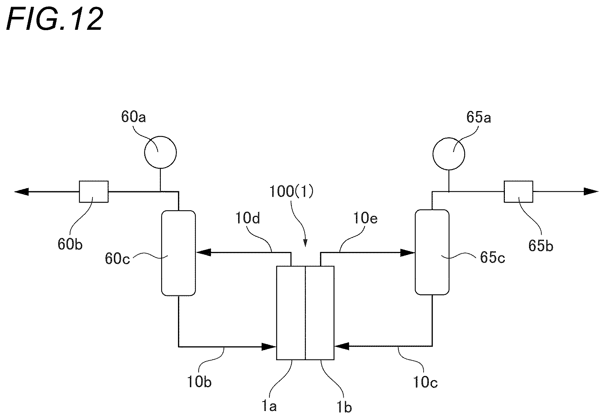

Next, a system for performing high-pressure operation of the electrochemical device 100 of the present embodiment will be described with reference to Figs. 11 and 12.

As illustrated in Fig. 11, a first pressure measurement device 60a and a first pressure adjustment device 60b are disposed in the anolyte discharge pipe 10d of the electrochemical device 100. The first pressure measurement device 60a is formed, for example, as a pressure monitoring device including a pressure gauge or a pressure sensor, although not limited thereto. The first pressure adjustment device 60b is formed as a valve device capable of stepwise adjusting an internal opening degree. The first pressure adjustment device 60b is formed as, for example, a needle valve. The first pressure measurement device 60a and the first pressure adjustment device 60b may be disposed in a pipe outside the electrochemical device 100 communicating with the anolyte discharge pipe 10d. The first pressure adjustment device 60b may measure a pressure in an internal flow path of the electrochemical device 100 communicating with the anolyte discharge pipe 10d.

A second pressure measurement device 65a and a second pressure adjustment device 65b are disposed in the catholyte discharge pipe 10e of the electrochemical device 100. The second pressure measurement device 65a is formed as a pressure gauge. The second pressure adjustment device 65b is formed as a valve device capable of stepwise adjusting an internal opening degree. The second pressure adjustment device 65b is formed as, for example, a needle valve. The second pressure measurement device 65a and the second pressure adjustment device 65b may be disposed in a pipe outside the electrochemical device 100 communicating with the catholyte discharge pipe 10e. The first pressure adjustment device 60b may measure a pressure in an internal flow path of the electrochemical device 100 communicating with the anolyte discharge pipe 10d.

The opening degree of the first pressure adjustment device 60b is adjusted manually or automatically according to the pressure measured by the first pressure measurement device 60a. The opening degree of the second pressure adjustment device 65b is adjusted manually or automatically according to the pressure measured by the second pressure measurement device 65a.

The pressure measured by the first pressure measurement device 60a and the pressure measured by the second pressure measurement device 65a are suitably selected according to the structure of the electrochemical device 100 and a type of an electrochemical reaction performed inside the electrochemical device 100.

For example, in alkaline water electrolysis using a porous membrane as the diaphragm 48, as a differential pressure between the anode chamber 1a and the cathode chamber 1b increases, the liquid movement due to the differential pressure between the anode chamber 1a and the cathode chamber 1b becomes excessive, and the diaphragm 48 is more likely to be damaged. Therefore, in the case of alkaline water electrolysis using the porous diaphragm 48, it is preferable to reduce the differential pressure between the anode chamber 1a and the cathode chamber 1b.

On the other hand, in the electrolysis of water using an ion exchange membrane as the diaphragm 48, the hydrogen gas generated in the cathode chamber 1b may be preferably pressurized for use or filled for transportation. In a case where the entire electrochemical device 100 is designed to be pressurizable, it is necessary to change pipes (for example, the anolyte supply pipe 10b, the catholyte supply pipe 10c, the anolyte discharge pipe 10d, and the catholyte discharge pipe 10e) connected to the electrochemical device 100 to a high pressure resistance specification. However, in a case where only the cathode chamber 1b is designed to be pressurizable, it is sufficient to change the components related to the cathode chamber 1b, for example, the catholyte supply pipe 10c and the catholyte discharge pipe 10e, to a high pressure resistance specification, so that the cost can be reduced.

On the other hand, the oxygen gas generated in the anode chamber 1a is preferably safely discharged to the outside of the electrochemical device 100.

Therefore, in the electrolysis of water using an ion exchange membrane as the diaphragm 48, it may be preferable to increase the differential pressure between the anode chamber 1a and the cathode chamber 1b within the range of durability of the ion exchange membrane or the like.

For example, when the hydrogen gas is pressurized for use, the opening degrees of the first pressure adjustment device 60b and the second pressure adjustment device 65b are adjusted such that the pressure measured by the second pressure measurement device 65a is higher than the pressure measured by the first pressure measurement device 60a.

As illustrated in Fig. 12, the system for performing the high-pressure operation of the electrochemical device 100 of the present embodiment may include a first gas-liquid separation device 60c connected to the anolyte discharge pipe 10d and a second gas-liquid separation device 65c connected to the catholyte discharge pipe 10e. The first gas-liquid separation device 60c and the second gas-liquid separation device 65c are containers having a gas-liquid separation function of separating liquid and gas from a gas-liquid two-phase fluid by using a density difference between the gas and the liquid.

As described above, a mixture of the anolyte and the anode gas may be discharged from the anolyte discharge pipe 10d. A mixture of the catholyte and the cathode gas may be discharged from the catholyte discharge pipe 10e.

As illustrated in Fig. 12, the first gas-liquid separation device 60c is formed to reflux the liquid anolyte to the anode chamber 1a through the anolyte supply pipe 10b. The second gas-liquid separation device 65c is formed to reflux the liquid catholyte to the cathode chamber 1b through the catholyte supply pipe 10c. Therefore, the system for performing the high-pressure operation of the electrochemical device 100 of the present embodiment can improve the efficiency of the electrochemical reaction in the electrochemical device 100 by including the first gas-liquid separation device 60c and the second gas-liquid separation device 65c.

One or both of the anolyte supply pipe 10b and the catholyte supply pipe 10c may be provided with a pump for promoting reflux. By providing the pump, when the electrolysis is performed in the electrochemical device 100, the discharge of the gas can be promoted, and a concentration distribution of a solution inside the electrochemical cell 1 can be reduced.

Finally, an experimental example using the system for performing high-pressure operation of the electrochemical device 100 of the present embodiment will be described below.

### [Experimental Example 3]

In Experimental Example 3, similarly to Experimental Example 2 described above, the first frame body 51a, the second frame body 51b, and the third frame body 51c of the electrochemical cell 1 of the example were formed by attaching a PTFE tape to stainless steel (SUS304). As the system for performing the high-pressure operation, a configuration including the first gas-liquid separation device 60c and the second gas-liquid separation device 65c of Fig. 12 was employed. As the first pressure adjustment device 60b and the second pressure adjustment device 65b, needle valves made of Teflon (registered trademark) were used. Pressure gauges were used as the first pressure measurement device 60a and the second pressure measurement device 65a. Other configurations are the same as those of Experimental Example 1 and Experimental Example 2 described above.

In Experimental Example 3, an electrolysis test was carried out in the above-described configuration. The anolyte supplied to the anode chamber 1a was a 1 mol/L sulfuric acid solution. The catholyte supplied to the cathode chamber 1b was pure water. In the electrochemical device 100, the electrolysis was performed at a current density of 1 A/cm². The opening degrees of the first pressure adjustment device 60b and the second pressure adjustment device 65b were adjusted such that the differential pressure between the anode chamber 1a and the cathode chamber 1b was 150 kPaG. The electrolysis was performed for 1 hour.

As a result, leakage of the anolyte, anode gas, catholyte, and cathode gas from the electrochemical device 100 was not confirmed.

Next, by fully opening the opening degree of the opening degree of the second pressure adjustment device 65b and adjusting the opening degree of the first pressure adjustment device 60b, the differential pressure between the anode chamber 1a and the cathode chamber 1b was adjusted to 150 kPaG, and the electrolysis was further performed for one hour.

As a result, leakage of the anolyte, anode gas, catholyte, and cathode gas from the electrochemical device 100 was not confirmed.

From the above results, it was suggested that according to the sealing portion 50 of the present embodiment, it is possible to operate the electrochemical device 100 under the differential pressure during the high-pressure operation, and thus the efficient operation according to the purpose of the electrochemical device 100 can be performed.

In the above embodiment, the O-ring is used as the sealing member of the present disclosure, but the sealing member of the present disclosure is not limited thereto. In general, the O-ring is an elastic body that is annular as a whole and has a circular or elliptical cross section (a thickness cross section), and is compressed between two components to seal a space between the two components. In general, the O-ring is one type of gasket, but any type of gasket may be used as the sealing member of the present disclosure as long as it is applicable. That is, when implementing the present disclosure, the overall shape, cross-sectional shape, material, and the like of the sealing member may be selected according to the required sealing performance, and are not limited to the examples in the present disclosure.

### REFERENCE SIGNS LIST

1 electrochemical cell
1a anode chamber
1b cathode chamber
1X electrochemical cell of comparative example
3a first plate
3b second plate
5a metal body
5b insulator
5c frame member
5d connecting portion
10 anode end frame
10a through hole
10b anolyte supply pipe
10c catholyte supply pipe
10d anolyte discharge pipe
10e catholyte discharge pipe
15 cathode end frame
15a through hole
18 fastening member
20a anode spacer
20a1 communication hole
20a2 communication hole
20a3 communication hole
20a4 communication hole
20b cathode spacer
25a anode busbar
25a1 end portion
25b cathode busbar
25b1 end portion
30 anode end plate
30a communication hole
30b communication hole
30c communication hole
30d communication hole
35 cathode end plate
35a communication hole
35b communication hole
35c communication hole
35d communication hole
38 bipolar plate
38a communication hole
38b communication hole
38c communication hole
38d communication hole
40 anode
40a anode catalyst layer
40b anode substrate
40c anode current collector
45 cathode
45a cathode catalyst layer
45b cathode substrate
45c cathode current collector
48 diaphragm
48a outer peripheral end
50 sealing portion
50a through hole
50X gasket of comparative example
51 frame body
51a first frame body
51b second frame body
51c third frame body
51d fourth frame body
51e fifth frame body
53 sealing member
53a first sealing member
53b second sealing member
53c third sealing member
55a first flow path plate
55a1 communication hole
55a2 O-ring
55a3 communication hole
55a4 O-ring
55b second flow path plate
55b1 communication hole
55b2 O-ring
55b3 communication hole
55b4 O-ring
58 locking portion
60a first pressure measurement device
60b first pressure adjustment device
60c first gas-liquid separation device
65a second pressure measurement device
65b second pressure adjustment device
65c second gas-liquid separation device
70 sealing portion
100 electrochemical device

## Claims

1. An electrochemical cell comprising:
a first plate and a second plate between which an anode chamber and a cathode chamber are respectively formed on respective opposing inner surface sides thereof; and
a sealing portion provided between the first plate and the second plate, wherein
the sealing portion includes
a plurality of frame bodies disposed at intervals from an inner side to an outer side, and
a plurality of sealing members disposed between the plurality of frame bodies and disposed in a compressed state between the first plate and the second plate.

2. The electrochemical cell according to claim 1, wherein
one or both of a surface opposing the first plate and a surface opposing the second plate of each of the plurality of frame bodies are formed of an insulator.

3. The electrochemical cell according to claim 1 or 2, wherein
one or both of the first plate and the second plate include a locking portion that restricts a relative position of the sealing portion with respect to the first plate and the second plate.

4. The electrochemical cell according to any one of claims 1 to 3, wherein
each of the plurality of frame bodies includes a plurality of frame members formed by separably dividing a part of a wall portion of the frame body in its extending direction.

5. The electrochemical cell according to claim 4, wherein
each of the plurality of frame members has a connecting portion that restricts relative positions therebetween.

6. An electrochemical device comprising:
the electrochemical cell according to any one of claims 1 to 5.
